# EUROPEAN PATENT APPLICATION

(11) **EP 2 764 898 A1**
(43) Date of publication of application: **13.08.2014**
(21) Application number: 13179584.1
(22) Date of filing: 07.08.2013
(51) Int. Cl.: A63F 13/211, A63F 13/2145, A63F 13/26, A63F 13/235

(54) **Information processing program, information processing device, information processing system, and information processing method**

(30) Priority: 06.02.2013 JP 2013021213
(71) Applicant: Nintendo Co. Ltd., Kyoto 601-8501 (JP)
(72) Inventor: Suzuki, Toshiaki, Kyoto, 601-8501 (JP)
(74) Representative: Lang, Johannes

(57) **Abstract**

In accordance with an attitude of a portable display device calculated based on data output from a sensor and an operation made on operation means, first display range setting means sets in a display target image a first display range in which a part of the display target image is to be displayed on the portable display device. First display control means displays in the display target image an image in the first display range on the portable display device.

## Description

### BACKGROUND OF THE INVENTION

### Field Of The Invention

The present invention relates to an information processing program, an information processing device, an information processing system, and an information processing method; and specifically to an information processing program, an information processing device, an information processing system, and an information processing method for, for example, displaying a part of an image on a portable display.

### Description of the Background Art

For example, as disclosed in Japanese Unexamined Patent Application Publication No. 9-305788 (hereinafter referred to as "Patent Literature 1"), there is a technique of displaying a part of a virtual space on a portable display in accordance with the movement and the attitude of the portable display.

The technique disclosed in Patent Literature 1 described above, however, determines the range in which the part of the virtual space is to be displayed, based on the movement and the attitude of the portable display. Thus, to display a desired display range, the user may need to operate the portable display in a difficult position.

### SUMMARY OF THE INVENTION

Accordingly, an object of the present invention is to provide an information processing program, an information processing device, an information processing system, and an information processing method that enable a user to easily move a display range.

In order to achieve the above object, the present invention may adopt, for example, the following structures. It is understood that for interpreting the recitations of the claims, the range thereof is to be interpreted only based on the recitations of the claims, and that in the case where the recitations of the claims are contradictory to the description of the specification, the recitations of the claims are given priority.

An exemplary configuration of an information processing program according to the present invention is executed by a computer included in an information processing device for displaying at least an image on a portable display device having a sensor configured to output data based on a movement or an attitude of a main body of the portable display device and also having operation means for enabling a user operation input. The information processing program causes the computer to function as first display range setting means and first display control means. The first display range setting means, in accordance with an attitude of the portable display device calculated based on the data output from the sensor and an operation made on the operation means, sets in a display target image a first display range in which a part of the display target image is to be displayed on the display device. The first display control means displays in the display target image an image in the first display range on the portable display device.

The "information processing device" described above may be formed of a device different from the portable display device. Alternatively, in the case where the display device has an information processing function, the "information processing device" may be formed of the display device. In the former case, the "different device" may execute each process of the present invention, whereas the portable display device may merely display an image generated by the "different device". Alternatively, in the case where the portable display device has an information processing function, each process of the present invention may be realized by a cooperation of the information processing function of the display device and the information processing function of the "different device". The "different device" may be formed of a plurality of information processing devices, and execution of each process of the present invention may be divided among the plurality of information processing devices. The "information processing device" may be a game device provided as an example in the example described later or a multi-purpose information processing device such as a general personal computer.

Based on the above, a display range changes in accordance with the movement or the attitude of a main body of a portable display device, and the display range changes also by an operation made on operation means. This makes it possible to easily move the display range in a display target image.

In addition, the first display range setting means may include attitude display range setting means and display range offsetting means. The attitude display range setting means, in accordance with the attitude of the portable display device calculated based on the data output from the sensor, sets the first display range. The display range offsetting means, in accordance with the operation made on the operation means, offsets in the display target image the first display range set by the attitude display range setting means. In this case, the first display control means may display in the display target image an image in the offset first display range on the portable display device.

Based on the above, the display range changes in accordance with the movement or the attitude of the main body of the portable display device, and the display range is also offset by an operation made on the operation means. This makes it possible to easily move the display range in a display target image.

In addition, the operation means may include direction indication means for enabling a direction indication operation with respect to at least two directions. In this case, the display range offsetting means may offset the first display range in a direction indicated by the direction indication operation made on the direction indication means.

Based on the above, the direction in which the display range is to be offset is set by an operation made on direction indication means. This makes it possible to intuitively make an operation of controlling the direction in which the display range is to be offset.

In addition, the information processing program further causes the computer to function as virtual camera setting means. The virtual camera setting means sets a virtual camera in a virtual space, at least a part of a field of view of the virtual camera being set as the first display range. In this case, the attitude display range setting means may set the first display range by changing an attitude of the virtual camera in accordance with the attitude of the portable display device. The display range offsetting means may offset the first display range by changing a line-of-sight direction of the virtual camera in the direction indicated by the direction indication operation made on the direction indication means.

Based on the above, it is possible to easily move the display range by controlling the attitude of a virtual camera.

In addition, the display range offsetting means, if the direction indication operation is not made on the direction indication means, may set an amount of offset of the first display range to 0.

Based on the above, the stoppage of an operation made on the direction indication means makes it possible to move the display range based only on the movement or the attitude of the main body of the portable display device. This makes it possible to easily cancel the offset of the display range.

In addition, when the direction indication operation is made, the direction indication means may be able to simultaneously indicate a direction and a magnitude in the direction. In this case, the display range offsetting means may offset the first display range by an amount of offset based on the magnitude indicated by the direction indication operation made on the direction indication means and in the direction indicated by the direction indication operation.

Based on the above, when an analog stick, a touch panel, or the like is used as the direction indication means, it is possible to set the direction and the amount in and by which the display range is to be offset, based on a tilt direction and a tilt angle, or based on a length or the like based on a touch direction and a touch position. This makes it possible to easily control the direction and the amount of offset by making an intuitive operation.

In addition, by tilting a prescribed member from a neutral state, the direction indication means may be able to simultaneously indicate a tilt direction from the neutral state and a tilt angle from the neutral state. The display range offsetting means may offset the first display range by an amount of offset based on the tilt angle and in a direction based on the tilt direction.

Based on the above, when an analog stick or the like is used as the direction indication means, it is possible to easily control the direction and the amount of offset by making an intuitive operation. Further, the amount of offset is set based on the tilt angle from a neutral state. Thus, by making an operation of gradually increasing or decreasing the tilt angle from the neutral state, it is possible to gradually offset and move the display range in accordance with the increase or decrease in the tilt angle.

In addition, the display range offsetting means may offset the first display range by an amount of offset based on a duration time in which the direction indication operation is made on the direction indication means, and in the direction indicated by the direction indication operation.

Based on the above, when a direction indication key (e.g., a cross-shaped key, a left button, or a right button) or the like is used as the direction indication means, it is possible to control the direction of offset using the direction indication key to be operated, and also control the amount of offset in accordance with the time in which the operation made on the direction indication key continues. Further, the amount of offset is set in accordance with an operation duration time since the operation has started. This makes it possible to gradually offset and move the display range in accordance with the lapse of the operation duration time.

In addition, the information processing program may further cause the computer to function as second display range setting means and second display control means. The second display range setting means sets a second display range in which at least a part of the display target image is to be displayed on a stationary display device. The second display control means displays in the display target image an image in the second display range on the stationary display device. In this case, the first display range setting means and the second display range setting means may set the first display range and the second display range in accordance with a positional relationship in real space between the stationary display device and the portable display device.

Based on the above, it is possible to display an image as if a space formed by the display target image is viewed through a plurality of display devices.

In addition, the display range offsetting means may set an amount of offset by which the first display range can be offset to less than 180° in a viewing angle of the display target image.

Based on the above, when the display range is offset, a sense of direction for the displayed display target image may be lost. It is, however, possible to prevent the sense of direction from being lost by limiting the amount of offset of the display range.

In addition, the display target image may be an image representing an inside of a prescribed virtual space and may also be an image having a wider viewing angle than a viewing angle of the first display range.

Based on the above, when a part of a virtual world having a relatively wide viewing angle is displayed on the portable display device, it is possible to easily move the display range in which the part of the virtual world is to be displayed on the portable display device.

In addition, the display target image may be an image obtained by capturing real space and may also be a panorama image having a wider viewing angle than a viewing angle of the first display range.

Based on the above, when a part of the panorama image obtained by capturing the real world is displayed on the portable display device, it is possible to easily move the display range in which the part of the panorama image is to be displayed on the portable display device.

The display target image described above may be a virtual space image or a panorama image having a viewing angle which is equal to or greater larger than 180° in one of an up-down direction and a left-right direction. Further, the display target image may be a virtual space image or a panorama image having a viewing angle of 360° in one of the directions. In the other direction, the display target image may have a viewing angle which is equal to or greater than that of the image to be displayed on the portable display device. Further, the display target image may have a viewing angle which is equal to or greater than twice the viewing angle of the image, equal to or greater than 120°, equal to or greater than 150°, or 180°. The panorama image may be an image captured by the information processing device, or may be an image captured by another device having the image capturing function and transmitted thereto via a prescribed storage medium or a network.

In addition, the first display range setting means may set the first display range in accordance with an operation made on, in the operation means, operation means capable of being operated by, when the portable display device is held by a user, the user who is holding the portable display device.

Based on the above, it is possible to facilitate an operation of setting a first display range.

In addition, the operation means capable of being operated by the user may be able to be operated with, when the user holds both ends of the portable display device with both hands, any one of the fingers of the user holding the portable display device.

Based on the above, it is possible to easily operate the portable display device with the fingers holding the portable display device.

The present invention may be implemented in the form of an information processing device or an information processing system each including the above means for performing the operations described above, or in the form of an information processing method including the operations described above performed by the above means.

Based on the present invention, a display range changes in accordance with the movement or the attitude of a main body of a portable display device, and the display range changes also by an operation made on operation means. This makes it possible to easily move the display range in a display target image.

These and other objects, features, aspects and advantages of the present invention will become more apparent from the following detailed description when taken in conjunction with the accompanying drawings.

### BRIEF DESCRIPTION OF THE DRAWINGS

FIG. 1 is a block diagram showing an example of information processing system 1;
FIG. 2A is a front view of an example of the appearance of a terminal device 2;
FIG. 2B is a rear view of an example of the appearance of the terminal device 2;
FIG. 3 shows an example of panorama moving images (images) displayed by the information processing system 1;
FIG. 4 shows an example of method for determining a display range in accordance with the attitude of the terminal device 2 and direction indication;
FIG. 5 shows an example of method for determining the display range in accordance with the attitude of the terminal device 2;
FIG. 6 shows an example of method for determining the display range in accordance with direction indication made on the terminal device 2;
FIG. 7 shows an example of main data and programs stored on a memory 6 of an information processing device 3;
FIG. 8 is a flowchart showing an example of first half of a processing operation executable by the information processing device 3; and
FIG. 9 is a flowchart showing an example of second half of the processing operation executable by the information processing device 3.

### DETAILED DESCRIPTION OF THE PREFERRED EMBODIMENTS

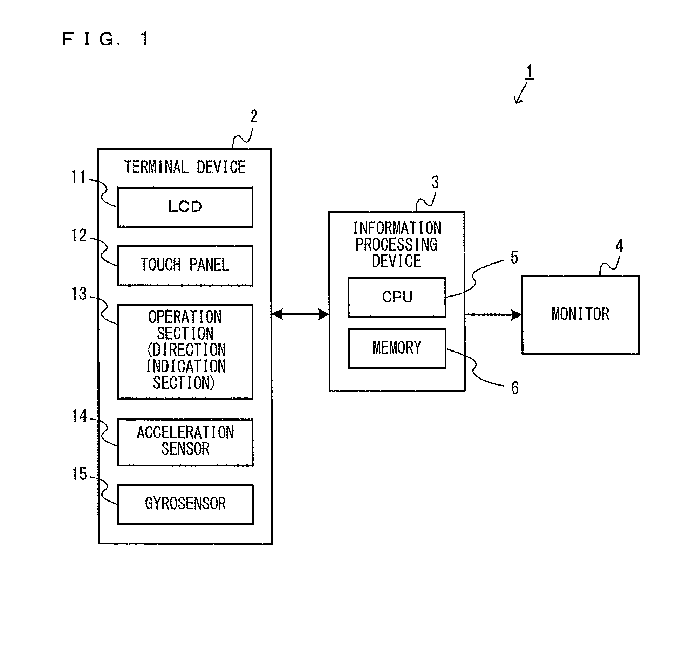

With reference to FIG. 1, an information processing device for executing an information processing program according to one example of the present embodiment and an information processing system including the information processing device will be described. FIG. 1 is a block diagram showing an example of an information processing system 1 including a non-portable information processing device 3. In an example, the information processing device 3 is formed of a non-portable game device, and the information processing system 1 is formed of a game system including the game device.

As shown in FIG. 1, the information processing system 1 includes a terminal device 2, the information processing device 3, and a monitor 4. In the present embodiment, the information processing system 1 generates an image (panorama image) and displays the image on a display device (the terminal device 2 and/or the monitor 4).

In the information processing system 1, the information processing device 3 executes an information processing operation in accordance with an input made on the terminal device 2, and an image obtained as a result of the execution is displayed on the terminal device 2 and/or the monitor 4. As can be seen, in the present embodiment, the information processing system 1 realizes an input function, an information processing function and a display function by use of a plurality of devices. In other embodiments, the information processing system 1 may be formed of a single information processing device (e.g., mobile or portable information processing device) for realizing these functions.

The terminal device 2 is an input device which can be held (which can be transported) by a user. The terminal device 2 is communicable with the information processing device 3. The terminal device 2 transmits operation data representing an operation made on the terminal device 2 to the information processing device 3. In the present embodiment, the terminal device 2 includes a display section (LCD 11). The terminal device 2 is also a display device. When an image is transmitted from the information processing device 3, the terminal device 2 displays the image on the LCD 11.

The terminal device 2 includes a touch panel 12 as an input section. The tough panel 12 is an example of position detection section for detecting a position, in a prescribed input plane (screen of the display section) provided in a housing, at which data has been input. The terminal device 2 also includes an operation section 13 as an input section.

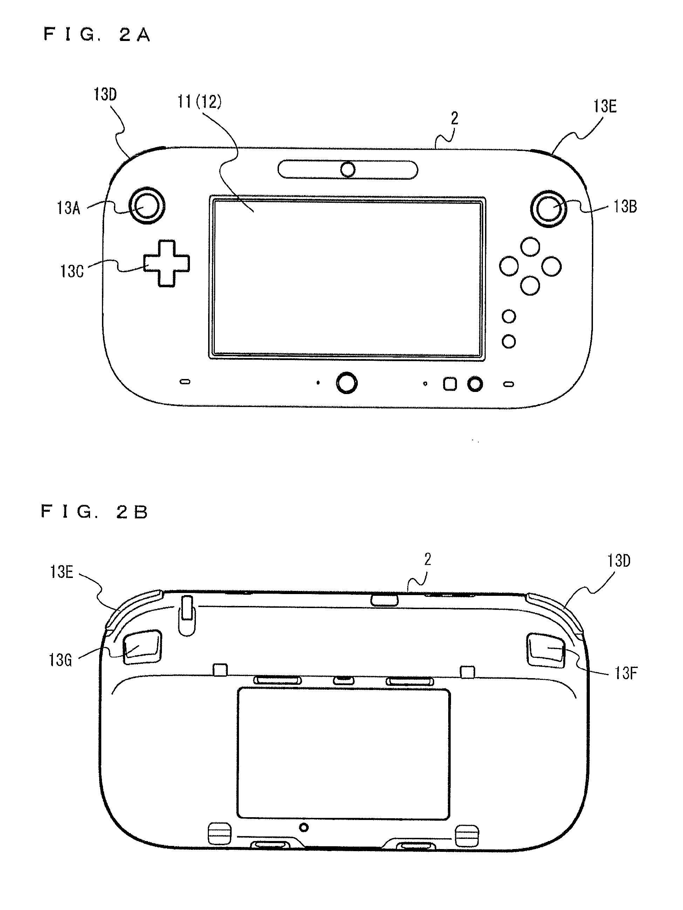

As shown in FIG. 2A and FIG. 2B, as an example, the operation section 13 of the terminal device 2 includes a direction indication section. Specifically, the direction indication section is composed of at least one of a left analog stick 13A, a right analog stick 13B, a cross-shaped key 13C, an L button 13D, an R button 13E, a ZL button 13F, and a ZR button 13G, and the like. For example, the left analog stick 13A and the right analog stick 13B enable the direction indication of all directions in accordance with the direction in which the stick has been tilted. Further, the cross-shaped key 13C enables the direction indication of eight directions in accordance with the direction in which the key has been pressed. Further, the set of the L button 13D and the R button 13E and the set of the ZL button 13F and the ZR button 13G enable the direction indication of a left-right direction in accordance with the pressed button. It should be noted that the direction indication section may be composed of a touch panel 12 or a touch pad. For example, the touch panel 12 or the touch pad enables direction indication in accordance with the direction in which a touch operation has been performed on the touch panel 12 or the touch pad with respect to a reference position on its input surface (e.g., the center of the input surface). The touch panel 12 or the touch pad also enables, by a touch operation made so as to slide on the input surface, the indication of the slide direction. The operation section 13 may further include an operation button or the like for making indication different from the above-described direction indication. Further, it is preferable that the direction indication section should be operation means provided at a position where, when both ends of the terminal device 2 are held with both hands, the operation means can be operated with any one of the fingers holding the terminal device 2.

The terminal device 2 further includes an acceleration sensor 14 as an input section. The acceleration sensor 14 detects an acceleration in a prescribed axial direction (in the present embodiment, directions of three axes, but may be a direction of at least one axis) of the terminal device 2. The terminal device 2 also includes a gyrosensor 15 as an input section. The gyrosensor 15 detects an angular velocity of a rotation about a prescribed axial direction (in the present embodiment, directions of three axes, but may be a direction of at least one axis) of the terminal device 2. The acceleration sensor 14 and the gyrosensor 15 are sensors for detecting information usable for calculating an attitude of the terminal device 2 (information usable for calculating or estimating the attitude). In other embodiments, the attitude of the terminal device 2 may be calculated by any method, and may be calculated by use of a sensor other than the above-described sensors or by use of a camera capable of capturing an image of the terminal device 2.

The information processing device 3 executes various types of information processing operations executable by the information processing system 1 including, for example, a processing operation of generating an image. In the present embodiment, the information processing device 3 includes a CPU (control section) 5 and a memory 6. The CPU 5 executes a prescribed information processing program by use of the memory 6 to realize various functions of the information processing device 3. The information processing device 3 may have any structure as long as the above-described information processing operations can be executed. In the present embodiment, the information processing device 3 generates an image (panorama image). The generated image is output to the terminal device 2 and/or the monitor 4 which acts as a display device.

The monitor 4 is an example of device acting as both of a display device for displaying the generated image and outputting the generated sound. The monitor 4 is capable of receiving data transmitted from the information processing device 3. When the image generated by the information processing device 3 is transmitted to the monitor 4, the monitor 4 displays the image.

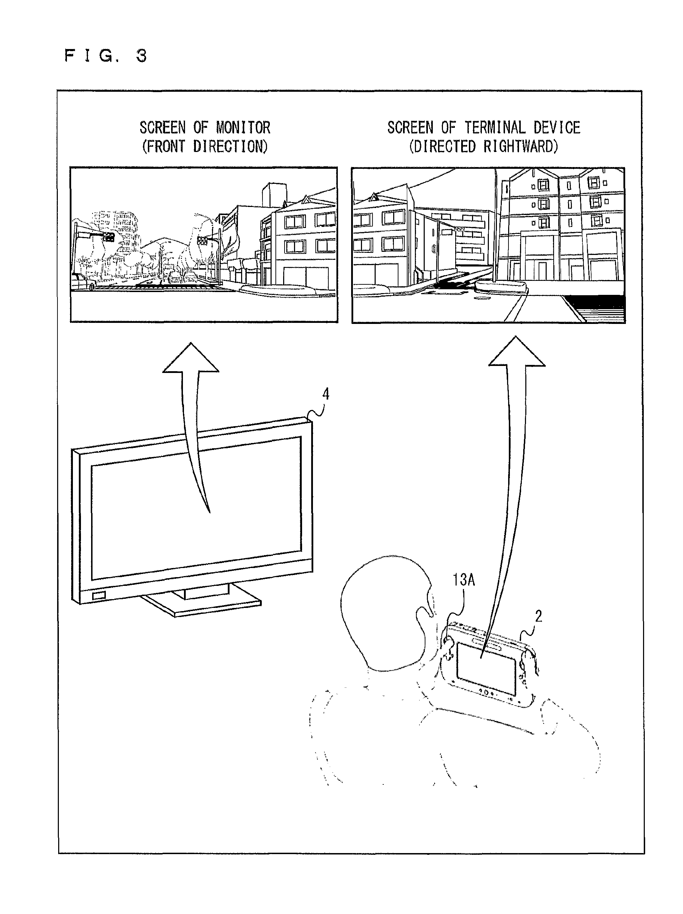

Now, a processing operation of reproducing a panorama moving image executable by the information processing system 1 will be described. FIG. 3 shows an example of panorama moving image (image) displayed by the information processing system 1. As shown in FIG. 3, in the present embodiment, the panorama image is displayed on the terminal device 2 and the monitor 4. In other embodiments, a panorama image may be displayed on at least one display device.

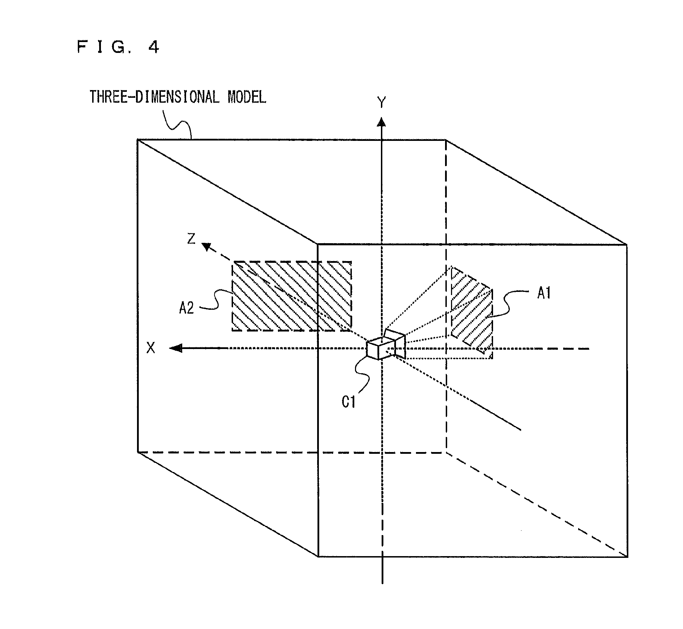

Herein, a "panorama image" is an image having a wider viewing angle than that of an image displayed on a display device. Namely, the panorama image basically has a part thereof displayed on the display device (however, in the case where a plurality of display devices are used as in the present embodiment, the entirety of a panorama image may be displayed on at least one of such display devices). A panorama image may be explained as an image, the line-of-sight direction of which is changed when a display range thereof is changed. In the present embodiment, a panorama image having an omnidirectional (360°) viewing angle in an up-down direction and a left-right direction is used (see FIG. 4). However, a panorama image may have a dead angle, and may have a viewing angle of, for example, about 180°. In the present embodiment, a panorama image is an actual image captured by a camera (image of an actual object). Alternatively, a panorama image may be partially or entirely a virtual image (CG image).

In the present embodiment, as the reproduction of a panorama moving image proceeds, panorama images, each of which is a frame of the stored panorama moving image, are read at a cycle of a predetermined time length and sequentially displayed on the display device (the terminal device 2 and the monitor 4). Namely, the panorama images are sequentially displayed on the display device to reproduce the panorama moving image. Specifically, the plurality of panorama images included in the panorama moving image are each assigned a frame number, and the panorama images are reproduced in the order of the frame number. In an example, in the case where a panorama moving image which is captured while the point of view is moved in a predetermined space (e.g., real world) as the time passes is displayed, the point of view of the panorama moving image is moved as the time passes during the reproduction. For example, as shown in FIG. 3, a panorama image of an environment as seen from a position on a street is displayed, and a panorama moving image proceeding on the street (panorama moving image, the point of view of which moves along the street) is reproduced. In another example, in the case where a panorama moving image which is captured while the point of view is not moved in a predetermined space (i.e., panorama moving image which is obtained by fixed-point image capturing) is displayed, the state of environment around the point of view is changed as the time passes during the reproduction.

As shown in FIG. 3, each display device (each of the terminal device 2 and the monitor 4) displays a partial range of the panorama image. Hereinafter, a range of the panorama image which is displayed on a display device will be referred to as a "display range". In FIG. 3, in a display range of a panorama image displayed on the monitor 4, the line-of-sight direction of the panorama image is the proceeding direction of the point of view at which the panorama image is captured (front direction). In the present embodiment, the display range of the monitor 4 is basically fixed to a predefined range. Alternatively, the position or the size of the display range of the panorama image may be changed in accordance with an operation performed by the user.

A display range displayed on the terminal device 2 is changed in accordance with the attitude of the terminal device 2. For example, in FIG. 3, the attitude of the terminal device 2 is directed rightward with respect to the front direction (direction from the user (terminal device 2) toward the monitor 4). The display range of the panorama image displayed on the terminal device 2 is obtained when the line-of-sight is directed rightward with respect to the proceeding direction. Further, in the present invention, the display range on the terminal device 2 is changed in accordance with the amount of offset based on an operation made on the direction indication section (e.g., the left analog stick 13A), in addition to the attitude of the terminal device 2. In this manner, the information processing system 1 determines the display range of the panorama moving image to be displayed on the display device, based on an input made on the input device (terminal device 2), and, when an operation has been made on the direction indication section, determines the display range by offsetting the display range in accordance with the direction indication. Owing to this, the user can freely change the line-of-sight direction (display range) by making an operation of changing the attitude of the terminal device 2 while viewing the panorama moving image, and can further display the panorama moving image by offsetting the display range by making an operation using the direction indication section in a scene where it is difficult to make the operation of changing the attitude of the terminal device 2.

FIG. 4 shows an example of method for determining the display range in accordance with the attitude of the terminal device 2 and direction indication. In the present embodiment, as shown in FIG. 4, a three dimensional model is located in a virtual space, and a virtual camera C1 is located at a prescribed position inside the three dimensional model (in the present embodiment, a position which is substantially the center of the three dimensional model). For generating an image of the three dimensional model as seen from the virtual camera C1 (image of inner side surfaces of the three dimensional model), image rendering is performed as texture on the inner side surfaces of the three dimensional model. Thus, the panorama image to be displayed on the terminal device 2 is generated. Of the panorama image, a visual field of the vertical camera C1 (hatched area A1 in FIG. 4) is the display range. In the present embodiment, the three dimensional model is cubical. Alternatively, the three dimensional model may have any shape, for example, a spherical shape or a columnar (e.g., cylindrical) shape.

In FIG. 4, the attitude of the virtual camera C1 for generating an image to be displayed on the terminal device 2 is controlled in accordance with the attitude of the terminal device 2, and the attitude of the virtual camera C1 is further controlled in accordance with direction indication made using the direction indication section. Owing to this, the display range can be changed in accordance with the attitude of the terminal device 2, and the display range can be further changed in accordance with the amount of offset based on direction indication made using the direction indication section. Hereinafter, an example of controlling the attitude of the virtual camera C1 in accordance with the attitude of the terminal device 2 and direction indication will be described.

First, as initial setting, a reference attitude of the terminal device 2 is set. For example, the attitude of the terminal device 2 at the start of, or at a predetermined timing before the start of, the reproduction of the panorama moving image is set as the reference attitude of the terminal device 2. Specifically, the attitude of the terminal device 2 at the start of the reproduction of the panorama moving image may be set as the reference attitude; the attitude of the terminal device 2 when the user makes a prescribed operation before the start of the reproduction of the panorama moving image may be set as the reference attitude; a predefined fixed attitude of the terminal device 2 may be set as the reference attitude; or one of a plurality of predefined fixed attitudes of the terminal device 2 may be selected by the user as the reference attitude. In the present embodiment, the attitude of the terminal device 2 is calculated based on an output value from the gyrosensor 15, and therefore, setting of the reference attitude is resetting of the attitude value calculated by the gyrosensor 15. Alternatively, for setting the reference attitude of the terminal device 2, an appropriate processing operation may be executed depending on the type of the sensor.

As initial setting, an initial attitude of the virtual camera C1 is set. For example, the initial attitude of the virtual camera C1 is set such that the line-of-sight direction (z-axis positive direction) of the virtual camera C1 matches a Z-axis positive direction of the virtual space (front direction of the panorama image), a leftward direction (x-axis positive direction) of the virtual camera C1 matches an X-axis positive direction of the virtual space, and an upward direction (y-axis positive direction) of the virtual camera C1 matches a Y-axis positive direction of the virtual space.

In accordance with a change of the attitude of the terminal device 2 with respect to the reference attitude (direction and amount of rotation about an xt axis, which is the left-right direction of the terminal device 2 at the reference attitude, about a yt axis, which is the up-down direction of the terminal device 2 at the reference attitude, and about a zt axis, which is a front-rear direction of the terminal device 2 at the reference attitude), the attitude of the virtual camera C1 is changed from the initial attitude (typically, the virtual camera C1 is rotated about the x axis, y axis and z axis of the virtual camera C1 at the initial attitude, namely, about the X axis, the Y axis and the Z axis, in the same direction by the same amount as those of the rotation of the terminal device 2 about the xt axis, the yt axis and the zt axis, respectively). Then, when direction indication has been made by making an operation on the direction indication section, the attitude of the virtual camera C1 is further changed in accordance with the amount of offset calculated from the direction indication (e.g., information representing the direction and the angle based on the direction indication). The information processing system 1 may change the size of the display range (may perform zoom-in or zoom-out) in accordance with an operation made on the terminal device 2 in addition to the position of the display range.

By contrast, a virtual camera (not shown) for generating an image to be displayed on the monitor 4 is set such that the line-of-sight thereof is basically directed in a prescribed reference direction (herein, the front direction, which is the above-described proceeding direction; Z-axis positive direction). Namely, the display range on the monitor 4 (hatched area A2 in FIG. 4) is set at a position in the front direction from the virtual camera. The position of the virtual camera is also fixed at a prescribed position (in the present embodiment, the central position of the three dimensional model).

In the present embodiment, the line-of-sight direction of the virtual camera C1 is controlled such that the relationship between the line-of-sight direction of the panorama image displayed on the monitor 4 and the line-of-sight direction of the panorama image displayed on the terminal device 2 generally matches the relationship between a depth direction of the display screen of the monitor 4 and a depth direction of the LCD 11 of the terminal device 2. Specifically, the above-described reference attitude is set in a state where the depth direction of the LCD 11 of the terminal device 2 is directed toward the monitor 4, and thus in this state, the line-of-sight direction of the virtual camera C1 is initially set in the same direction as the line-of-sight direction of the virtual camera for the monitor 4. When the attitude of the terminal device 2 is changed from the reference attitude, the attitude of the virtual camera C1 is changed in a direction in accordance with the change of the attitude by an amount in accordance with the amount of change. Owing to this, the user can change the orientation of the terminal device 2 while viewing a scene in a line-of-sight direction (front direction) by use of the monitor 4, and thus can view a scene in a desired direction (direction other than the front direction). The user can also direct the depth direction of the LCD 11 of the terminal device 2 toward the monitor 4, and thus can easily have the panorama image in the front direction displayed on the LCD 11. In this manner, the user can handle the position of the monitor 4 as the reference for displaying the panorama image (reference by which the panorama image in the front direction is displayed). Moreover, when the change of the attitude of the terminal device 2 matches the change of the attitude of the virtual camera C1, the orientation of the terminal device 2 in a real space matches the line-of-sight direction of the virtual camera C1 in the virtual space. Therefore, the user can feel that the space represented by the panorama image is highly realistic.

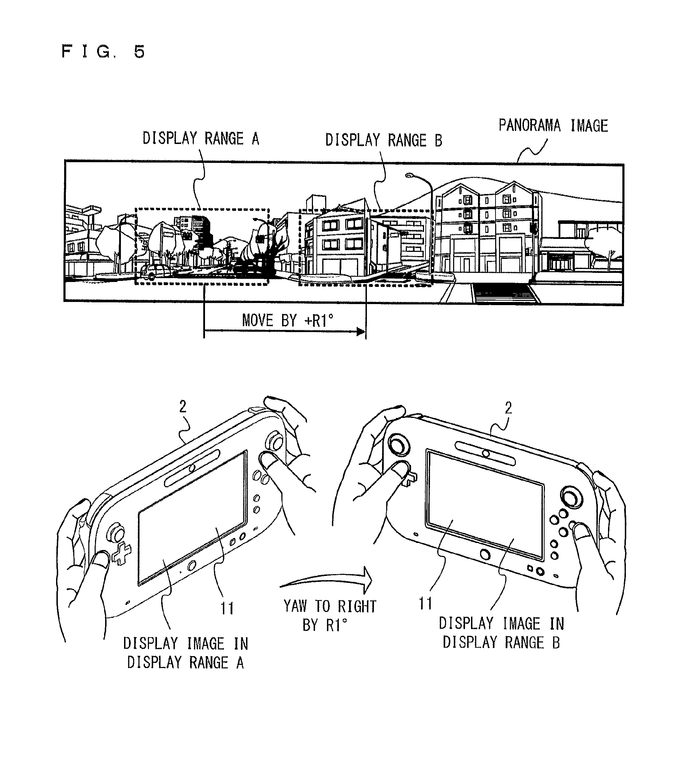

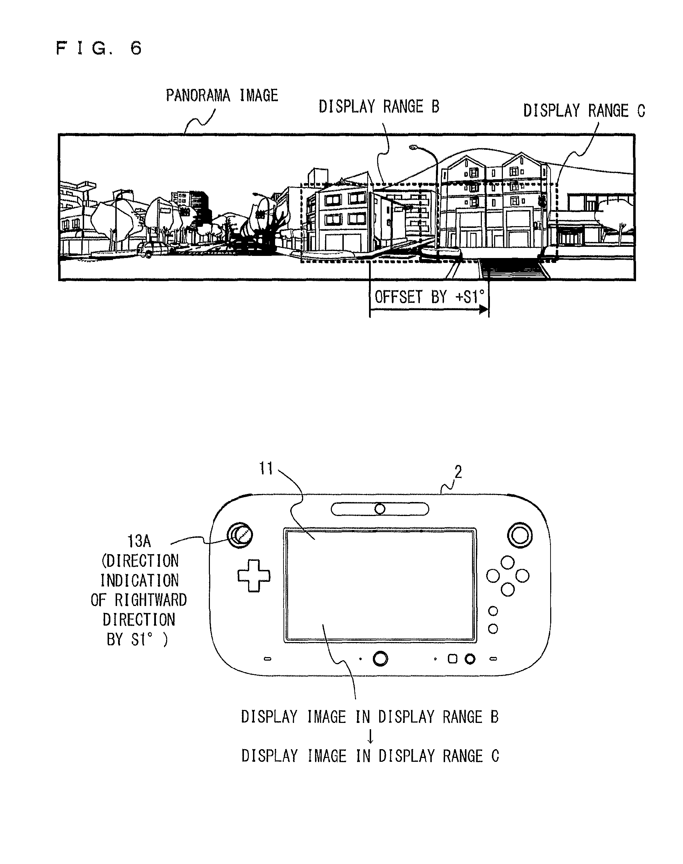

Now, with reference to FIG. 5 and FIG. 6, an example of a method of determining the display range in accordance with the attitude of the terminal device 2 and direction indication is described more specifically. FIG. 5 is a diagram showing an example where the display range is determined in accordance with the attitude of the terminal device 2. FIG. 6 is a diagram showing an example where the display range is determined in accordance with direction indication made on the terminal device 2.

In FIG. 5, the case is considered where the attitude of the terminal device 2 itself is directed rightward by an angle R1° (i.e., the depth direction of the LCD 11 rotationally moves to the right by a yaw angle R1°). In this case, also the attitude of the virtual camera C1 located inside the three-dimensional model yaws in the rightward direction by the angle R1°, whereby the display range of the panorama image displayed on the LCD 11 changes from a display range A to a display range B. Here, when a display target image is a panorama image having a wide viewing angle at least in the left-right direction (e.g., 360°), the display range B is a range obtained by, in the panorama image, moving the display range from the display range A in the rightward direction by the angle R1° in the viewing angle (+R1°, if the rightward direction is represented by a positive value). Alternatively, although not shown in the figures, when the attitude of the terminal device 2 itself is directed upward by an angle R2° (i.e., the depth direction of the LCD 11 rotationally moves upward by a pitch angle R2°), the display range of the panorama image displayed on the LCD 11 changes to a range obtained by, in the panorama image, moving the display range upward by the angle R2° in the viewing angle in the up-down direction (+R2°, if the upward direction is represented by a positive value). Yet alternatively, when the attitude of the terminal device 2 itself is rotated about the depth direction by an angle R3° (i.e., the attitude of the terminal device 2 is rotationally moved about the depth direction of the LCD 11 by a roll angle R3°), the display range of the panorama image changes by, in the panorama image, rotating the display range about a fixation point by the angle R3°. The user changes the attitude of the terminal device 2 in the up-down direction or the left-right direction or rolls the attitude of the terminal device 2, and thereby can view the panorama image (panorama moving image) by freely changing the line-of-sight direction (the display range) by the angle of change (the yaw angle, the pitch angle, or the roll angle).

Now, the case is considered where, in FIG. 6, the user makes the direction indication of the rightward direction by an angle S1°, using the direction indication section (e.g., the left analog stick 13A) included in the operation section 13 of the terminal device 2. As an example, the user tilts the left analog stick 13A to the right from a neutral state by the angle S1°, thereby making the direction indication of the rightward direction by the angle S1°. In this case, also the attitude of the virtual camera C1 located inside the three-dimensional model yaws in the rightward direction by the angle S1°, whereby the display range of the panorama image displayed on the LCD 11 is offset from the display range B to a display range C. Specifically, the display range C is a range obtained by, in the panorama image, offsetting the display range from the display range B further in the rightward direction by +S1° in the viewing angle. It should be noted that when the user has stopped the direction indication (i.e., the left analog stick 13A has returned to the neutral state), the offset is canceled, and the panorama image in the display range B is displayed on the LCD 11. Further, although not shown in the figures, when the user has made the direction indication of the upward direction by an angle S2°, using the direction indication section, the display range of the panorama image displayed on the LCD 11 is offset to a range obtained by, in the panorama image, moving the display range in the upward direction by +S2° in the viewing angle in the up-down direction. In this manner, the user can display the panorama image by offsetting the display range in accordance with an operation using the direction indication section, in addition to a change of the display range based on a change of the attitude of the terminal device 2. This enables the user to display the panorama image in a desired display range even in a scene where it is difficult to change the attitude of the terminal device 2.

It should be noted that the above description is given using the example where a viewing angle is set to be the same as the tilt angle by which an analog stick has been tilted from the neutral state, and the display range changes so as to be offset by the viewing angle in the tilt direction in which the analog stick has been tilted. Alternatively, the display range may be offset in another form in response to direction indication. In a first example, a viewing angle may be obtained by multiplying, by a prescribed coefficient, the tilt angle by which an analog stick has been tilted from the neutral state, and the display range may change so as to be offset by the viewing angle in the tilt direction in which the analog stick has been tilted. In a second example, a viewing angle may be calculated in accordance with the time in which direction indication has been made (e.g., the duration time in which the operation of pressing the cross-shaped key 13C, the L button 13D, the R button 13E, the ZL button 13F, or the ZR button 13G has been made), and the display range may change so as to be gradually offset by the viewing angle in the direction of which the direction indication has been made. In a third example, when direction indication is made by making a touch operation on the touch panel 12, a viewing angle may be calculated in accordance with the touch position (e.g., the length from a reference position to the touch position or the length of a slide operation), and the display range may change so as to be gradually offset by the viewing angle in the direction of which the direction indication has been made. In the cases of the second example and the third example, as a result of the fact that the direction indication has ended (e.g., the operation of pressing the direction indication section has ended or a touch-off operation has been made), the display range immediately returns to the display range set before the direction indication, and the panorama image is displayed on the LCD 11. The angle by which the display range can be offset can be set based on the angle by which, or the length in which, direction indication can be made. However, for example, the viewing angle by which the display range can be offset is set to be within ±45° or ±90°. The viewing angle by which the display range can be offset, however, is not limited to these values, and may be set such that the absolute value of the viewing angle is less than 180°.

Further, the above description is given using the panorama image (panorama moving image) as an example of the image to be displayed on the terminal device 2. Alternatively, another image may be displayed on the terminal device 2. For example, any image may be displayed so long as an image in a display range that is a part of a display target image is displayed on the terminal device 2. The above-described display range control can be similarly applied also when a part of a virtual world or the virtual space is displayed on the terminal device 2. As an example, the image to be displayed on the terminal device 2 may be a panorama image captured while moving in the virtual world or a panorama image captured at a fixed point in the virtual world, or may be an image obtained by synthesizing a panorama image obtained by capturing the real world and an image of the virtual world.

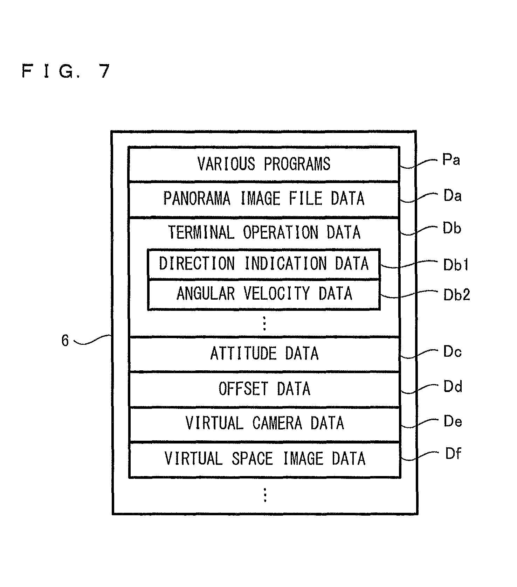

Now, the processing operation performed by the information processing device 3 will be described in detail. First, with reference to FIG. 7, main data used in the processing operation will be described. FIG. 7 shows an example of main data and programs stored on the memory 6 of the information processing device 3.

As shown in FIG. 7, in a data storage area of the memory 6, the panorama image file data Da, terminal operation data Db, attitude data Dc, offset data Dd, virtual camera data De, virtual space image data Df, and the like are stored. The memory 6 may store, in addition to the data shown in FIG. 7, data usable for an application to be executed, other data usable for the processing operation and the like. In a program storage area of the memory 6, a group Pa of various programs included in the information processing program is stored.

The panorama image file data Da includes panorama image data, sound data and the like as information of each frame. The panorama image data for each frame number n (1, 2, 3, ...) includes data representing a panorama image In to be pasted as texture to the inner surfaces of the above-described three dimensional model. For example, the panorama moving image which is encoded and stored on a prescribed storage medium is decoded by a prescribed method, and thus the panorama image data is obtained. The panorama image file data Da is merely an example. As long as substantially the same information is obtained, the structure of the data may be changed, or another data may be stored in addition to, and/or instead of, the data.

The terminal device data Db represents a content of operations made on the terminal device 2, and includes direction indication data Db1, angular velocity data Db2 and the like. The direction indication data Db1 represents a content of operations made on the direction indication section provided in the terminal device 2.
The angular velocity data Db2 represents an angular velocity caused to the terminal device 2, which is output from the gyrosensor 15.

The attitude data Dc represents the attitude of the terminal device 2 in the actual space, for example, the rotation amount of the terminal device 2 from the reference attitude.

The offset data Dd represents the amount and the direction of offset calculated in accordance with direction indication made using the direction indication section.

The virtual camera data De is data regarding the virtual camera located at the center of the three dimensional model. For example, the virtual camera data De is data on the position, attitude, field of view (viewing angle) and the like of the virtual camera in the virtual space. It should be noted that when the panorama image (panorama moving image) is displayed on each of the terminal device 2 and the monitor 4, the virtual camera data De is data regarding a plurality of virtual cameras for displaying images on the terminal device 2 and the monitor 4.

The virtual space image data Df represents a virtual space image of the inner surfaces of the three dimensional model as viewed from the virtual camera.

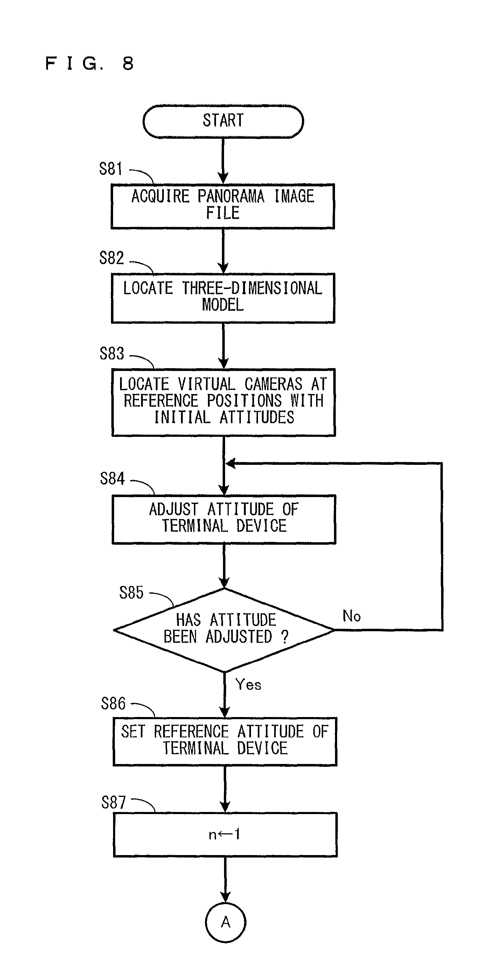

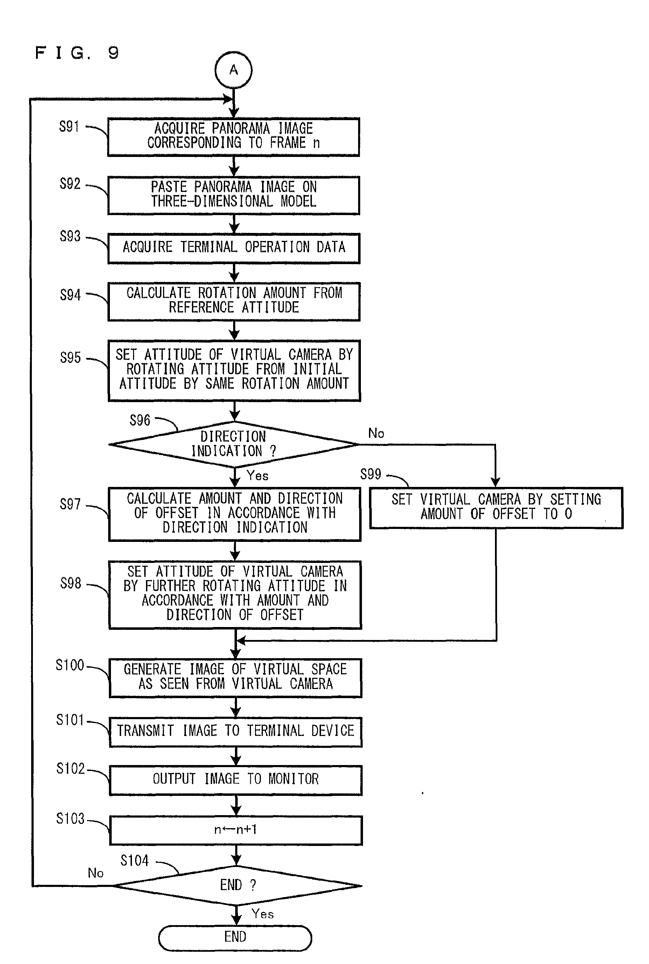

Now, with reference to FIG. 8 and FIG. 9, the processing operation executed by the information processing device 3 will be described in detail. FIG. 8 is a flowchart showing an example of first half of the processing operation executed by the information processing device 3, and FIG. 9 is flowchart showing an example of second half of the processing operation executed by the information processing device 3. With reference to FIG. 8 and FIG. 9, a processing operation of displaying the panorama image (panorama moving image) on the terminal device 2 and the monitor 4 will be mainly described among processing operations executed by the information processing device 3. Other processing operations which are not directly related to this processing operation will not be described in detail.

The CPU 5 initializes the memory 6 and the like, and reads the information processing program stored on a nonvolatile memory in the information processing device 3 or on an optical disc to the memory 6. Then, the CPU 5 starts execution of the information processing program. The flowcharts shown in FIG. 8 and FIG. 9 show the processing operation executed after the above processes are completed.

The steps in the flowcharts shown in FIG. 8 and FIG. 9 merely show an example. The order of the steps may be changed, or a different processing operation may be executed in addition to, or instead of, the processing operation shown in FIG. 14 and FIG. 15, as long as substantially the same results are obtained. In the present embodiment, each step in the flowcharts will be described as being executed by the CPU 5. Alternatively, a part of, or the entirety of, the steps in the flowcharts may be executed by a processor other than the CPU or a dedicated circuit.

Referring to FIG. 8, the CPU 5 acquires a panorama image file (step 81). For example, the CPU 5 acquires a panorama image file including sound data from a nonvolatile memory in the information processing device 3, from a storage medium mounted on the information processing device 3, or from another device via a network or the like, and stores the panorama image file in the panorama image file data Da.

Next, the CPU 5 locates the three dimensional model, to which the panorama image is to be pasted, in the virtual space such that the center of the three dimensional model is positioned at the origin of the virtual space (step 82), and advances the processing operation to the next step. For example, in the case where the three dimensional model is cubic, the CPU 5 locates the three dimensional model with respect to XYZ axes set in the virtual space, such that a front surface of the three dimensional model perpendicularly crosses the Z axis on the positive side of the Z axis, a rear surface of the three dimensional model perpendicularly crosses the Z axis on the negative side of the Z axis, a left side surface of the three dimensional model perpendicularly crosses the X axis on the positive side of the X axis, a right side surface of the three dimensional model perpendicularly crosses the X axis on the negative side of the X axis, a top surface of the three dimensional model perpendicularly crosses the Y axis on the positive side of the Y axis, and a bottom surface of the three dimensional model perpendicularly crosses the Y axis on the negative side of the Y axis.

Next, the CPU 5 locates virtual cameras C1 and C2 at the reference positions with the initial attitudes (step 83), and advances the processing operation to the next step. For example, the CPU 5 sets the origin of the virtual space (i.e., center of the three dimensional model) as the reference positions of the virtual cameras C1 and C2. The CPU 5 sets, as the initial attitude, the attitude with which xyz axes of each of the virtual cameras C1 and C2 (the x-axis positive direction is the leftward direction of the virtual camera, the y-axis positive direction is the upward direction of the virtual camera, and the z-axis positive direction is the line-of-sight direction of each of the virtual cameras C1 and C2) match the XYZ axes of the virtual space. Then, the CPU 5 updates the data on the positions and the attitudes of the virtual cameras C1 and C2 in the virtual camera data De by use of the reference positions and the initial attitudes of the virtual cameras C1 and C2.

Next, the CPU 5 urges the user to adjust the attitude of the terminal device 2 (step 84) and waits for the attitude to be adjusted (step 85).

In step 86, the CPU 5 sets the current attitude of the terminal device 2 as the reference attitude, and advances the processing operation to the next step. For example, the CPU 5 initializes the attitude of the terminal device 2 (rotation amount from the reference attitude) represented by the attitude data Dc (i.e., the CPU 5 sets the rotation amount about each axis to o), and sets the resultant attitude as the reference attitude of the terminal device 2.

As described above, in the processes in steps 84 through 86, the attitude of the terminal device 2 at the time when the process in step 84 is performed or after elapse of a prescribed time length from such a time may be set as the reference attitude; the attitude of the terminal device 2 when the user makes a prescribed operation may be set as the reference attitude; a predefined fixed attitude of the terminal device 2 may be set as the reference attitude; or one of a plurality of predefined fixed attitudes may be selected by the user as the reference attitude. In an example, when the same panorama moving image is to be reproduced and displayed on the monitor 4 as on the terminal device 2, the CPU 5 provides a display on the terminal device 2 and/or the monitor 4 for urging the user to do the following: adjust the attitude of the terminal device 2 such that the orientation of the LCD 11 of the terminal device 2 matches the orientation of the display screen of the monitor 4; and make a prescribed operation on the terminal device 2 when the attitude is thus adjusted. When acquiring the operation data representing that the prescribed operation has been made on the operation section 13 of the terminal device 2, the CPU 5 determines that the attitude is adjusted as described above, and sets, as the reference attitude, the attitude of the terminal device 2 at the time when the operation is made. In this case, as a result of the processes in steps 84 through 86, the attitude of the terminal device 2 adjusted such that the orientation of the LCD 11 of the terminal device 2 matches the orientation of the display screen of the monitor 4 is set as the reference attitude of the terminal device 2.

Next, the CPU 5 sets frame number n to 1 (step 87), and advances the processing operation to the next step 91 (see FIG. 9).

Referring to FIG. 9, the CPU 5 acquires a panorama image corresponding to frame n among the panorama image data of the panorama image file data Da (step 91), and advances the processing operation to the next step.

Next, the CPU 5 pastes the panorama image acquired in step 91 as texture on inner surfaces of the three dimensional model (step 92), and advances the processing operation to the next step. For example, as described above with reference to FIG. 4, a panorama image is pasted as texture on each of the inner surfaces of the three dimensional model.

Next, the CPU 5 acquires terminal operation data from the terminal device 2 (step 93), and advances the processing operation to the next step. Data representing a content of operations made on the operation section 13 (the direction indication section) and data representing the output value of the gyrosensor 15 are transmitted as terminal operation data from the terminal device 2 to the information processing device 3 at a cycle of a predetermined time length and stored in the direction indication data Db1 and the angular velocity data Db2.

Next, the CPU 5 uses the data acquired in step 93 to calculate the rotation direction and the rotation amount of the terminal device 2 from the reference attitude (the rotation direction and the rotation amount after the initialization in step 86) (step 94), and advances the processing operation to the next step. For example, in step 94, the rotation direction and the rotation amount about each of prescribed axial directions of the terminal device 2 at the reference attitude (e.g., each of an up-down axis direction, a left-right axis direction, and a front-rear axis direction of the terminal device 2 at the reference attitude) are calculated, and the attitude data Dc is updated. The rotation direction can be represented by whether the rotation amount has a positive value or a negative value. Therefore, only data representing the rotation amount may be stored in the attitude data Dc. For example, the CPU 5 adds the rotation amount based on the angular velocity acquired in step 94 in the current process to the rotation amount calculated in step 94 in the immediately previous process to find a new rotation amount.

Next, the CPU 5 sets the attitude of the virtual camera C1 by rotating the attitude in the virtual space from the initial attitude by the rotation amount calculated in step 94 (step 95), and advances the processing operation to the next step. For example, the CPU 5 sets the attitude of the virtual camera C1 by rotating the attitude from the initial attitude about the X axis direction of the virtual space (x axis direction of the virtual camera C1 at the initial attitude) by the amount same as the rotation amount of the terminal device 2 about the left-right axis direction calculated in step 94, about the Y axis direction of the virtual space (y axis direction of the virtual camera C1 at the initial attitude) by the amount same as the rotation amount of the terminal device 2 about the up-down axis direction calculated in step 94, and about the Z axis direction of the virtual space (z axis direction of the virtual camera C1 at the initial attitude) by the amount same as the rotation amount of the terminal device 2 about the front-rear axis direction calculated in step 94. Then, the CPU 5 updates the data on the attitude of the virtual camera C1 in the virtual camera data De.

Next, the CPU 5 determines whether or not the user has made direction indication (step 96). For example, with reference to the data acquired in the above step 93, if an operation has been made on the direction indication section of the terminal device 2 (e.g., an operation of tilting the left analog stick 13A in any direction has been made), the CPU 5 determines that the user has made direction indication. Then, if the user has made direction indication, the CPU 5 advances the processing operation to step 97. By contrast, if the user has not made direction indication (e.g., the left analog stick 13A is in the neutral state), the CPU 5 advances the processing operation to step 99.

In step 97, in accordance with the direction indication made using the direction indication section, the CPU 5 calculates the amount and the direction of offset, and advances the processing operation to the next step. For example, in accordance with the angle and the direction by and in which the left analog stick 13A has been tilted, the CPU 5 calculates the amount and the direction by and in which the display range is to be offset, and updates the offset data Dd using the calculated amount and direction. Specifically, the CPU 5 calculates the viewing angle by which the display range is to be offset, from the angle by which the analog stick has been tilted from the neutral state, and calculates the amount and the direction of offset so that the display range is to be offset by the viewing angle in the direction in which the analog stick has been tilted. It should be noted that the viewing angle by which the display range is to be offset may be the same angle as the angle by which the analog stick has been tilted, or may be an angle obtained by multiplying, by a prescribed coefficient, the angle by which the analog stick has been tilted.

Next, the CPU 5 sets the attitude of the virtual camera C1 by rotating the attitude in the virtual space set in the above step 95, by the amount of offset calculated in the above step 97 in the direction of offset calculated in the above step 97 (step 98), and advances the processing operation to step 100. For example, the CPU 5 sets the attitude of the virtual camera C1 by setting the up-down direction and the left-right direction (the x axis direction and the y axis direction) of the virtual camera C1 set in the above step 95 as references for the up-down direction and the left-right direction, and rotating the virtual camera C1 from the attitude set in the above step 95, by the amount of offset calculated in the above step 97 in the direction of offset calculated in the above step 97 such that the line-of-sight direction (z-axis positive direction) is the front direction, and updates data regarding the attitude of the virtual camera C1 in the virtual camera data De.

Meanwhile, in step 99, the CPU 5 sets the attitude of the virtual camera C1 by setting the amount of offset to 0, and advances the processing operation to step 100. For example, if the amount of offset in the offset data Dd is set to a value other than 0, the CPU 5 sets the amount of offset to 0 to update the offset data Dd. Further, the CPU 5 maintains the attitude of the virtual camera C1 set in the above step 95.

In step 100, the CPU 5 generates an image of the inner surfaces of the three dimensional model as viewed from each of the virtual cameras C1 and C2 (virtual space image), and advances the processing operation to the next step. For example, the CPU 5 uses data representing the virtual space image generated based on each of the virtual cameras C1 and C2 to update the virtual space image data De.

Next, the CPU 5 transmits the virtual space image generated based on the virtual camera C1, among the virtual space images indicated by the virtual space image data De, to the terminal device 2 (step 101), and advances the processing operation to the next step. For example, the virtual space image is received by the terminal device 2 and output to the LCD 11. Thus, the virtual space image is displayed. Owing to this, in the panorama image, an image in a prescribed display range as seen from the virtual camera C1 is displayed on the LCD 11. When the information processing device 3 transmits the virtual space image to the terminal device 2, a prescribed compression process may be performed. In this case, data of the virtual space image treated with the compression process is transmitted to the terminal device 2, and is treated with a prescribed decompression process by the terminal device 2. Then, the virtual space image is displayed.

Next, the CPU 5 outputs the virtual space image generated based on the virtual camera C2, among the virtual space images indicated by the virtual space image data De, to the monitor 4 (step 102), and advances the processing operation to the next step. For example, the virtual space image is acquired by and displayed on the monitor 4. Owing to this, in the panorama image, an image in a prescribed display range as seen from the virtual camera C2 is displayed on the monitor 4. In the above-described embodiment, the virtual camera C2 is located so as to be fixed at the reference position while maintaining the initial attitude. Therefore, in the panorama image, an image in a display range fixed such that a prescribed direction (e.g., the front direction) is the line-of-sight direction is displayed on the monitor 4, and a panorama moving image is reproduced at substantially the same time axis and displayed on the terminal device 2 and the monitor 4.

Next, the CPU 5 increments the frame number n (step 103), and determines whether or not to finish the processing operation (step 104). A condition for finishing the processing operation may be, for example, that reproduction of an image of the final frame of the panorama moving image which is provided for reproduction is finished, that the user makes an operation of finishing the processing operation, or the like. When the processing operation is determined not to be finished, the CPU 5 returns the processing operation to step 91 and repeats the above-described processes. When the processing operation is determined to be finished, the CPU 5 finishes the processing operation of the flowcharts. Until it is determined in step 104 that the processing operation is to be finished, the series of processes in steps 91 through 104 are performed in repetition.

It should be noted that when a panorama image in the fixed line-of-sight direction (e.g., the front direction) is displayed on the monitor 4 and the reference positions and the initial attitudes of the virtual cameras C1 and C2 are set to be the same as each other, it is possible to display the panorama image in the line-of-sight direction (the front direction) on the LCD 11 by directing the depth direction of the LCD 11 of the terminal device 2 toward the monitor 4. Further, a change of the attitude of the terminal device 2 and a change of the attitude of the virtual camera C1 are matched with each other, whereby the orientation of the terminal device 2 in real space matches the line-of-sight direction of the virtual camera C1 in the virtual space. That is, in accordance with the positional relationship between the terminal device 2 and the monitor 4 in real space, the display range in which an image is to be displayed on the terminal device 2 and the display range in which an image is to be displayed on the monitor 4 are set. Thus, the user views the panorama image displayed on the terminal device 2 and the panorama image displayed on the monitor 4, and thereby can feel that the space represented by these panorama images is realistic. Here, if the display range in which an image is to be displayed on the terminal device 2 is offset by making direction indication based on an operation made on the direction indication section, the relationship between the above-described positional relationship and the display ranges may be broken. The stoppage of a direction indication operation using the direction indication section, however, cancels the offset of the display range and sets the display range based only on a change of the attitude of the terminal device 2. This makes it possible to easily return the relationship between the above-described positional relationship and the display ranges to the original relationship.

In addition, an image of the entire panorama image (omnidirectional image) may always be displayed on the monitor 4. For example, the omnidirectional image may be generated by synthesizing images obtained from the image-capturing camera which has captured the panorama moving image, or by synthesizing panorama images pasted on the inner surfaces of the three dimensional model. The technique for generating the omnidirectional image is well known and will not be described herein in detail. Further, the panorama image displayed on the terminal device 2 may be displayed on the monitor 4 as it is. In this case, the panorama image displayed on the terminal device 2 may be displayed on the monitor 4 in real time. In the case where the terminal device 2 reproduced the same panorama moving image in the past, the following panorama image among the panorama images which were displayed on the terminal device 2 during the past reproduction may be displayed on the monitor 4: a panorama image at substantially the same time axis, in the reproduction of the panorama moving image, as the panorama image displayed on the terminal device 2 at the current time.

In the embodiment described above, the information processing system 1 includes only one terminal device 2. Alternatively, the information processing system 1 may include a plurality of terminal devices 2. Namely, the information processing device 3 may be wirelessly communicable with each of the plurality of terminal devices 2, so that the information processing device 3 can transmit image data to each of the terminal devices 2 and receive data of the operation section 13 and the gyrosensor 15 from each of the terminal devices 2. A virtual camera for each terminal device 2 may be located in the virtual space, so that the information processing device 3 can control the attitude of each virtual camera in accordance with the attitude of the corresponding terminal device 2 and direction indication and transmit an image of the virtual space as viewed from each virtual camera to the corresponding terminal device 2. The information processing device 3 may perform wireless communication with each terminal device 2 in a time division manner or in a frequency division manner.

The above-described terminal device 2 does not execute the series of processes described above with reference to FIGS. 8 and 9 or the information processing operation executed by the information processing device 3; namely, acts as a so-called thin client terminal. Alternatively, the terminal device 2 may have a function of executing a prescribed information processing operation (game processing operation) by a predetermined program (game program), like a mobile game device or the like. Alternatively, at least a part of the series of processes executed by the information processing device 3 in the above-described example may be executed by the terminal device 2 and another device other than the terminal device 2. For example, if the information processing device 3 is further configured to communicate with another device other than the terminal device 2 (e.g., another server, another game device, or another mobile terminal), the other device may cooperate to perform the processing steps in the processing. As an example, the other device may generate a virtual world and a sound and perform the game processing using the virtual world, and the result of the game processing may be displayed on the terminal device 2 and the monitor 4. Another device may thus perform at least some of the processing steps in the processing, which enables processing similar to that described above. Further, the processing described above can be performed by a processor or the cooperation of a plurality of processors, the processor and the plurality of processors contained in an information processing system including at least one information processing device. Further, in the embodiment described above, the processing indicated in the flow chart described above is performed by the CPU 5 of the information processing device 3 executing a predetermined game program. Alternatively, some or all of the game processing indicated in the flow chart may be performed by a dedicated circuit included in the information processing device 3.

Based on the above-described variations, the present invention can be realized in a system form of so-called cloud computing or a distributed system form of wide area network or local area network. For example, in the distributed system form of local area network, the above-described processing operation can be executed by a cooperation of a non-portable information processing device (non-portable game device) and a mobile information processing device (mobile game device). In these system forms, there is no specific limitation regarding which of the devices is to perform which of the steps described above. Regardless of how the processing operation is divided among the devices, the present invention can be realized, needless to say.

In addition, the processing orders, the setting values, the conditions used in the determinations, and the like that are used in the game processing described above are merely illustrative. Thus, it goes without saying that the present embodiment can be achieved also with other orders, other values, and other conditions.

The above-described information processing program may be supplied to the information processing device 3 not only via an external storage medium such as an optical disc-type storage medium or an external memory, but also via a wired or wireless communication circuit. The above-described information processing program may be stored in advance on a nonvolatile storage device in the information processing device 3. Examples of the information storage medium for storing the information processing program include, as well as CD-ROMs, DVDs, optical disc-type storage mediums similar thereto, and nonvolatile memories, flexible discs, hard discs, magneto-optical discs, magnetic tapes and the like. The information storage medium storing the information processing program may be a nonvolatile memory storing the information processing program. Such a storage medium is considered as a storage medium readable by a computer or the like. For example, it is possible to provide the above-described various functions by causing a computer or the like to read and execute the information processing programs stored on these storage mediums.

The systems, devices and apparatuses described herein may include one or more processors, which may be located in one place or distributed in a variety of places communicating via one or more networks. Such processor(s) can, for example, use conventional 3D graphics transformations, virtual camera and other techniques to provide appropriate images for display. By way of example and without limitation, the processors can be any of: a processor that is part of or is a separate component co-located with the stationary display and which communicates remotely (e.g., wirelessly) with the movable display; or a processor that is part of or is a separate component co-located with the movable display and communicates remotely (e.g., wirelessly) with the stationary display or associated equipment; or a distributed processing arrangement some of which is contained within the movable display housing and some of which is co-located with the stationary display, the distributed portions communicating together via a connection such as a wireless or wired network; or a processor(s) located remotely (e.g., in the cloud) from both the stationary and movable displays and communicating with each of them via one or more network connections; or any combination or variation of the above.

The processors can be implemented using one or more general-purpose processors, one or more specialized graphics processors, or combinations of these. These may be supplemented by specifically-designed ASICs (application specific integrated circuits) and/or logic circuitry. In the case of a distributed processor architecture or arrangement, appropriate data exchange and transmission protocols are used to provide low latency and maintain interactivity, as will be understood by those skilled in the art.

Similarly, program instructions, data and other information for implementing the systems and methods described herein may be stored in one or more on-board and/or removable memory devices. Multiple memory devices may be part of the same device or different devices, which are co-located or remotely located with respect to each other.

While the present invention has been described in detail, the foregoing description is in all aspects illustrative and not restrictive. It is to be understood that numerous other modifications and variations can be devised without departing from the spirit and scope of the present invention. It is also to be understood that the scope of the present invention is indicated by the appended claims rather than by the foregoing description. It is also to be understood that the detailed description herein enables one skilled in the art to make changes coming within the meaning and equivalency range of the present invention. It is to be understood that as used herein, the singular forms used for elements and the like with "a" or "an" are not intended to exclude the plural forms thereof. It should be also understood that the terms as used herein have definitions typically used in the art unless otherwise mentioned. Thus, unless otherwise defined, all scientific and technical terms used herein have the same meanings as those generally used by those skilled in the art to which the present invention pertains. If there is contradiction, the present specification (including the definitions) precedes.

As described above, the present invention is usable for, for example, an information processing program, an information processing device, an information processing system, an information processing method and the like for the purpose of, for example, enabling a user to easily move a display range.

## Claims

1. An information processing program to be executed by a computer (5) included in an information processing device (3) for displaying at least an image on a portable display device (2) having a sensor (14, 15) configured to output data based on a movement or an attitude of a main body of the portable display device and also having operation means (13) for enabling a user operation input, the information processing program causing the computer to function as:
first display range setting means (5, S94, S95) for, in accordance with an attitude of the portable display device calculated based on the data output from the sensor and an operation made on the operation means, setting in a display target image a first display range in which a part of the display target image is to be displayed on the display device; and
first display control means (5, S100, S101) for displaying in the display target image an image in the first display range on the portable display device.

2. The information processing program according to claim 1, wherein
the first display range setting means includes:
attitude display range setting means (5, S94, S95) for, in accordance with the attitude of the portable display device calculated based on the data output from the sensor, setting the first display range; and
display range offsetting means (5, S97, S98) for, in accordance with the operation made on the operation means, offsetting in the display target image the first display range set by the attitude display range setting means, and
the first display control means displays in the display target image an image in the offset first display range on the portable display device.

3. The information processing program according to claim 2, wherein
the operation means includes direction indication means (13A-13G) for enabling a direction indication operation with respect to at least two directions, and
the display range offsetting means offsets the first display range in a direction indicated by the direction indication operation made on the direction indication means.

4. The information processing program according to claim 3, further causing the computer to function as
virtual camera setting means (5, S83) for setting a virtual camera in a virtual space, at least a part of a field of view of the virtual camera being set as the first display range, wherein
the attitude display range setting means sets the first display range by changing an attitude of the virtual camera in accordance with the attitude of the portable display device, and
the display range offsetting means offsets the first display range by changing a line-of-sight direction of the virtual camera in the direction indicated by the direction indication operation made on the direction indication means.

5. The information processing program according to claim 3 or 4, wherein
the display range offsetting means, if the direction indication operation is not made on the direction indication means, sets an amount of offset of the first display range to 0.

6. The information processing program according to any one of claims 3 to 5, wherein
when the direction indication operation is made, the direction indication means can simultaneously indicate a direction and a magnitude in the direction, and
the display range offsetting means offsets the first display range by an amount of offset based on the magnitude indicated by the direction indication operation made on the direction indication means and in the direction indicated by the direction indication operation.

7. The information processing program according to claim 6, wherein
by tilting a prescribed member from a neutral state, the direction indication means can simultaneously indicate a tilt direction from the neutral state and a tilt angle from the neutral state, and
the display range offsetting means offsets the first display range by an amount of offset based on the tilt angle and in a direction based on the tilt direction.

8. The information processing program according to any one of claims 3 to 5, wherein
the display range offsetting means offsets the first display range by an amount of offset based on a duration time in which the direction indication operation is made on the direction indication means, and in the direction indicated by the direction indication operation.

9. The information processing program according to any one of claims 1 to 8, further causing the computer to function as:
second display range setting means (5, S83) for setting a second display range in which at least a part of the display target image is to be displayed on a stationary display device (4); and
second display control means (5, S102) for displaying in the display target image an image in the second display range on the stationary display device, wherein
the first display range setting means and the second display range setting means set the first display range and the second display range in accordance with a positional relationship in real space between the stationary display device and the portable display device.

10. The information processing program according to any one of claims 2 to 8, wherein
the display range offsetting means sets an amount of offset by which the first display range can be offset to less than 180° in a viewing angle of the display target image.

11. The information processing program according to any one of claims 1 to 10, wherein
the display target image is an image representing an inside of a prescribed virtual space and is also an image having a wider viewing angle than a viewing angle of the first display range.

12. The information processing program according to any one of claims 1 to 10, wherein
the display target image is an image obtained by capturing real space and is also a panorama image having a wider viewing angle than a viewing angle of the first display range.

13. The information processing program according to any one of claims 1 to 12, wherein
the first display range setting means sets the first display range in accordance with an operation made on, in the operation means, operation means capable of being operated by, when the portable display device is held by a user, the user who is holding the portable display device.

14. The information processing program according to claim 13, wherein
the operation means capable of being operated by the user can be operated with, when the user holds both ends of the portable display device with both hands, any one of the fingers of the user holding the portable display device.

15. An information processing device for displaying at least an image on a portable display device having a sensor configured to output data based on a movement or an attitude of a main body of the portable display device and also having operation means for enabling a user operation input, the information processing device comprising:
first display range setting means for, in accordance with an attitude of the portable display device calculated based on the data output from the sensor and an operation made on the operation means, setting in a display target image a first display range in which a part of the display target image is to be displayed on the display device; and
first display control means for displaying in the display target image an image in the first display range on the portable display device.

16. An information processing system, including a plurality of devices configured to communicate with each other, for displaying at least an image on a portable display device having a sensor configured to output data based on a movement or an attitude of a main body of the portable display device and also having operation means for enabling a user operation input, the information processing system comprising:
first display range setting means for, in accordance with an attitude of the portable display device calculated based on the data output from the sensor and an operation made on the operation means, setting in a display target image a first display range in which a part of the display target image is to be displayed on the display device; and
first display control means for displaying in the display target image an image in the first display range on the portable display device.

17. An information processing method to be executed by a processor or a cooperation of a plurality of processors, the processor and the plurality of processors contained in an information processing system including at least one information processing device for displaying at least an image on a portable display device having a sensor configured to output data based on a movement or an attitude of a main body of the portable display device and also having operation means for enabling a user operation input, the information processing method comprising:
a first display range setting step of, in accordance with an attitude of the portable display device calculated based on the data output from the sensor and an operation made on the operation means, setting in a display target image a first display range in which a part of the display target image is to be displayed on the display device; and
a first display control step of displaying in the display target image an image in the first display range on the portable display device.
